# EUROPEAN PATENT SPECIFICATION

(11) **EP 1 828 437 B1**
(45) Date of publication and mention of the grant of the patent: **18.04.2012**
(21) Application number: 05822034.4
(22) Date of filing: 22.12.2005
(51) Int. Cl.: C23C 22/06, C23C 30/00, C23C 22/05

(54) **CHROME FREE COMPOSITION FOR METAL SURFACE TREATMENT AND SURFACE-TREATED METAL SHEET**
CHROMFREIE ZUSAMMENSETZUNG ZUR METALLOBERFLÄCHENBEHANDLUNG UND OBERFLÄCHENBEHANDELTES METALLBLECH
COMPOSITION EXEMPTE DE CHROME POUR TRAITEMENT DE SURFACE DES METAUX ET FEUILLE DE TOLE A SURFACE TRAITEE

(30) Priority: 23.12.2004 KR 20040111343
(43) Date of publication of application: 05.09.2007
(73) Proprietor: Posco, Pohang Kyungsangbook-do 790-300 (KR)
(72) Inventor: PARK, Rho-Bum, Pohang, Kyungsangbook-do 790-300 (KR); PARK, Ki-Duck, Pohang, Kyungsangbook-do 790-785 (KR); YOO, Hong-Jong, Pohang, Kyungsangbook-do 790-785 (KR); HAN, Kook-Jin, Pohang, Kyungsangbook-do 790-785 (KR); JIN, Yeong-Sool, Pohang, Kyungsangbook-do 790-785 (KR); NOH, Sang-Keol, Pohang, Kyungsangbook-do 790-785 (KR)
(74) Representative: Crowhurst, Charlotte Waveney
(86) International application number: PCT/KR2005/004471
(87) International publication number: WO 2006/068438

(56) References cited:
- EP-A- 1 146 144
- EP-A- 1 378 547
- WO-A-01/92598
- WO-A1-01/31083
- WO-A1-01/92602
- WO-A1-98/48075
- WO-A1-2004/009870
- JP-A- 2001 335 954
- JP-A- 2002 069 660
- US-A1- 2004 054 044

## Description

### Technical Field

The present invention relates to chrome free composition for metal surface treatment providing excellent characteristics of high conductivity, corrosion resistance, alkali resistance, and high temperature and humidity resistance, and steel sheet surface-treated thereby.

### Background Art

Recently, as concerns about environmental problems are greatly increasing, the use of environmental contaminants is strongly restricted all over the world. Examples of the environmental contaminants are Cr, Pb, Cd, Hg, PBB, PBDE, and so on. Specifically, the typical restrictions on the use of the environmental contaminants are Restriction of Hazardous Substances (RoHS) (which is effective July 1, 2006), Waste from Electrical and Electronic Equipment (WEEE) (which is effective July 1, 2006), End-of-Life Vehicles (ELV) (which is effective January 1, 2007), and Registration, Evaluation and Authorization of Chemicals (REACH), which were adopted by EU. Accordingly, all enterprises around the world need to actively cope with new environment management policies, such as development of environment-friendly products, reduction of industrial waste, and green procurement.

According to the related art, a surface treatment method using a chromate film coating comprising chrome as main component is usually applied to provide excellent corrosion resistance and painting adhesion to a galvanized steel sheet, a zinc based alloy plated steel sheet, an aluminium plated steel sheet, an aluminum based alloy plated steel sheet, a cold rolled steel sheet, and a hot rolled steel sheet, which are used for vehicle materials, household appliances, building materials, and so on. The chromate treatments are classified into an electrolytic chromate treatment and a coating chromate treatment. In the electrolytic chromate treatment, a metal sheet is negatively electrolyzed using a processing solution comprising a hexavalent chrome as a main component and various anions of sulfuric acid, phosphoric acid, boric acid and halogen. In the coating chromate treatment, a metal sheet is dipped into a processing solution or the processing solution is sprayed on the metal sheet, wherein the processing solution is prepared by adding inorganic colloid and inorganic ions into a solution where some of hexavalent chromes are reduced to trivalent chromes.

In using these methods, countermeasures against the noxious property of hexavalent chrome contained in the chromate processing solution must be taken in working environments, drainage process, and so on. In addition, harmfulness to human bodies and environmental pollution problems are rising in the recycling and disposal of vehicles, household appliances, and building materials using the surface-treated metal sheet.

Accordingly, steel manufacturers try to develop a surface-treated steel sheet that can satisfy various requirements, including corrosion resistance, alkali resistance, and conductivity, without using hexavalent chrome. In a conventional method of fabricating a surface-treated steel sheet without using chrome, a metal salt film composed of phosphate as a main component is primarily coated on a steel sheet, and a resin based film composed of acryl and urethane as a main component is secondarily coated on the metallic-salt sheet. In another method, both the primary film and the secondary film are with a resin based coating composition.

According to these methods, however, the electrical conductivity or weldability of the metal sheet is often degraded by the thickness of the metallic salts or sheet. Therefore, these methods are inappropriate for the treatment of the steel sheet to be used in copiers, printers, VCRs, computers for electromagnetic wave shielding, suppression of internal noise, and securing of workability.

In addition, as most of household appliance manufacturers demand a surface-treated metal sheet having excellent conductivity without using chrome, a chrome free coating metal sheet is being developed as a method of coating the resin based film only one time. However, if the resin based composition for metal surface treatment does not have specially excellent constitution, quality characteristics such as corrosion resistance is greatly degraded compared with a chromate or phosphate pretreatment coating metal sheet. Recently, in order to develop environment-friendly products regarding the chrome free surface-treated metal sheet, many leading foreign and domestic household appliance manufacturers establish unique quality specification of materials and purchase only quality certified products.

As a conventional coating mood capable of obtaining excellent conductivity without using hexavalent chrome, the use of coating compositions comprising metal ions of Ag, Mg and Mn in a water soluble organic resin is known from EP 1 146 144 A. Methods of coating polyaniline on a metal sheet are disclosed in Japan Patent Laid-Open Publication Nos. H8-92479 and H8-500770. However, since the polyaniline having high rigidity and low adhesion is disposed between a metal and a resin film, delamination may occur in an interface between the polyaniline and the metal and an interface between the polyaniline and the resin. For this reason, there occurs a problem when the metal sheet is upper coated for providing an attractive design, corrosion resistance, and other functions. It is known that the sheet with low adhesion has a low corrosion resistance. In addition, a large amount of precipitate is formed because of low solution stability and a toxic smell is emitted. Therefore, working environment and workability will be degraded as a whole.

### Disclosure of Invention

### Technical Problem

An object of the present invention is to provide a composition for metal surface treatment capable of providing chrome-free coating with excellent conductivity, corrosion resistance, alkali resistance, high temperature and humidity resistance even with a single coating of a resin based film.

Another object of the present invention is to provide a steel sheet coated with the composition for metal surface treatment.

The present invention is not limited to the above objects and other objects and features of the present invention will become apparent to those having ordinary skill in the art from the description of this invention. [20]

### Technical Solution

The present invention provides a composition for metal surface treatment is provided comprising:
(i) 10 weight % to 70 weight % with respect to the total solid content of the composition of a vinyl based binder resin in which a corrosion-resistant inorganic material is bonded to the vinyl based resin in an amount of 5 parts by weight to 23 parts by weight with respect to 100 parts by weight of the vinyl based binder resin;
(ii) 16 weight % to 75 weight % with respect to the total solid content of the composition of an acryl based binder resin to which a corrosion-resistant inorganic material is bonded in an amount of 5 parts by weight to 23 parts by weight with respect to 100 parts by weight of the acryl based binder resin;
   optionally
(iii) 50 weight % or less with respect to the total solid content of the composition of a resin selected from the group consisting of acryl, urethane, epoxy, alkyd, styrene/butadiene, polyethylene, polypropylene, polyester and combinations thereof, in which a corrosion-resistant inorganic material is not combined,
   optionally
(iv) 10 weight % or less based on the total solid content of the composition of a separate additional corrosion resistant inorganic material;
   optionally
(v) an additive selected from a wetting agent, a crosslinking agent, a curing agent, a lubricant, an antifoaming agent and combinations thereof; and
(vi) a solvent;
wherein the corrosion resistant Inorganic material in (i), (ii), and (iv) is selected from silicon (Si, titanium (Ti), aluminum (Al), magnesium (Mg), zirconium (Zr), molybdenum (Mo), phosphorous (P), tungsten (W), vanadium (V), nickel (Ni), silver (Ag), gold (Au), Copper (Cu), and combinations thereof; and wherein the amount of corrosion-resistant inorganic material is in the range of 3 weight % to 25 weight % with respect to the total solid content of the composition.

According to another aspect of the present invention, a surface-treated metal sheet treated with the above composition is provided.

### Advantageous Effects

A chrome free composition for metal surface treatment and surface-treated steel sheet according to the present invention have enhanced conductivity as well as corrosion resistance, alkali resistance, and high temperature and humidity resistance as similar to or much better than the conventional phosphate pretreating metal sheet In addition, an environment-friendliness is achieved because chrome is not used. Accordingly, there is an effect for acquiring a demanded quality standard, which provides an advantageous merit of preemption over global market. That is, the acquisition of the improved quality results in considerable economic benefits through the increase of sales amount.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates a process of forming a coated layer, which is fabricated by coating a composition for surface treatment according to the present invention;
FIGs. 2A and 2B illustrate an evaluation result of a heat resistance in a coated steel sheet, which is fabricated by coating a composition for surface treatment of an example 5 and a comparative example 8 on an electro- galvanized steel sheet; and
Figs. 3A and 3B illustrate a result of a surface structure of the coated layer when observed using an atomic force microscopy (AFM) after the compositions of the example 5 and the comparative example 8 are coated on the electro-galvanized steel sheet, respectively.

### Best Mode for Carrying Out the Invention

Reference will now be made in detail to the preferred embodiments of the present invention, examples of which are illustrated in the accompanying drawings.

The present invention is directed to a composition for surface treatment capable of fabricating a metal sheet with excellent corrosion resistance and conductivity although a resin based film is coated only one time without using any chrome component, instead of a conventional chromate treatment. The composition for surface treatment comprises a binder resin combined with high corrosion-resistant organic/inorganic materials and a solvent. The composition is chrome-free watersoluble or a water dispersed composition.

The binder resin combined with the corrosion-resistant inorganic material is prepared by adding corrosion-resistant inorganic material into a monomer in polymerization reaction so that the corrosion-resistant inorganic material reacts with organic functional group of a polymer so as to be uniformly introduced in the polymer.

The corrosion-resistant inorganic material is selected from silicon (Si), titanium (Ti), aluminum (Al), magnesium (Mg), zirconium (Zr), molybdenum (Mo), phosphorous (P), tungsten (W), vanadium (V), nickel (Ni), silver (Ag), gold (Au), copper (Cu) and combinations containing at least two thereof. Further, it is more preferable to use Si, Si-P, Si-Ti, Si-Al as a main component. In the polymerization reaction of the monomer for preparing the binder resin, in which the corrosion-resistant inorganic material is combined, a corrosion-resistant inorganic precursor is reacted together to make the corrosion-resistant Inorganic material reacts with the functional group (e.g., OCOH, Cl, OH, etc.) of the binder resin. At this time, it is possible to accelerate the reaction by adding a catalyst or heating.

Meanwhile, the corrosion-resistant inorganic materials are introduced to a polymer chain during the polymerization of the binder resins as inorganic precursors comprising the corrosion-resistant inorganic material in the form of salt, oxide or hydride. These inorganic precursor may be added in a type of a powder, an emulsion or a solution into the monomer to prepare the binder resin. Silica, silicate, titania, titanate, alumina, aluminate, zirconia, zirconate, magnesia, molybdate, phosphate, or the like, can be used as a preferred example of the precursor and salt, oxide or hydride of W, V, Ni, Ag, Au, Cu and so on can be also used. As the corrosion-resistant inorganic material, mixtures of single inorganic compounds may be used simultaneously or sequentially. In addition, the compound containing at least two inorganic materials may be used as the corrosion-resistant Inorganic material.

In the composition for the surface treatment according to the present invention, the solid concentration of the vinyl based binder resin Is In a range of 10 weight % to 70 weight % with respect to the total solid content of the composition. Since the vinyl based resin exhibits strong water resistance, chemical resistance, acid resistance, salt water resistance as well as strong coaling property, it is used for waterproofing of an industrial sheet and cloth, and further it is coated on a steel sheet or aluminum sheet to prevent scratches of the sheets. In addition, the vinyl based binder resin is smooth to the touch and it is also effective for soundproofing. If the solid content of the vinyl based binder resin is less than 10 weight %, the vinyl based binder resin does not exhibit the brine resitance property and the chemical resistant property against penetration of corrosion ions so that the alkali resistance is deteriorated. Therefore, if degrease is conducted in pH 13 or more alkali solution at 50°C for 5 minutes, there occurs a fatal problem that makes the resin film delaminated. If the solid content of the vinyl based binder resin is more than 70 weight %, the high temperature and humidity resistance is deteriorated so that there occurs serious darkening phenomenon. Examples of the vinyl based binder resin may include but not limited to vinyl based binders which are prepared from at least one of the monomer selected from a group consisting of vinyl acetate, vinyl alcohol and vinyl chloride.

According to the present invention, in order to reinforce the high temperature and humidity resistance and the cold resistance, an acryl based binder resin is used together with a vinyl based binder resin. Examples of the acryl based binder resin may include but not liminted to acryl based binders which are prepared from at least one of the monomers selected from a group consisting resin n-butyl acrylate, methylmethacrylate and n-butyl methacrylate.The solid content of the acryl based binder resin is in a range of 15 weight % to 75 weight % with respect to the total solid content of the composition. If the solid content of the acryl based binder resin is less than 15 weight %, there occurs a problem that deteriorates the high temperature and humidity resistance. If the solid content of the acryl based binder resin exceeds 75 weight %, there occurs a problem that makes the alkali resistance lowered.

The solid content of the corrosion-resistant inorganic material bonded to the binder resin through substitution reaction is in a range of 3 weight % to 25 weight % on the basis of the total solid content of the composition. If the amount of the corrosion-resistant inorganic material is less than 3 weight %, the corrosion resistance becomes deteriorated so there is no effect in spite of adding the inorganic material. Whereas, if the amount is more than 25 weight %, there are generated lots of precipitations due to saturation of the concentration, causing the deterioration of solution stability, corrosion resistance, alkali resistance, and high temperature and humidity resistance.

In the vinyl based binder resin combined with the corrosion-resistant inorganic material, it is preferable that the corrosion-resistant inorgainc material should be bonded(combined) to the vinyl based binder in a range of 5 part by weight to 23 part by weight with respect to 100 part by weight of the vinyl based binder resin. Furthermore, in the acryl based binder resin combined with the corrosion-resistant material, it is preferable that the corrosion-resistant material should be bonded to the acryl based binder resin in a range of 5 part by weight to 23 part by weight with respect to 100 part by weight of the acryl based binder resin. If the corrosion-resistant inorgainc materials less than 5 parts by weight are combined to the binder resins, the improvement of corrosion-resistant is not enough. On the other hand, the corrosion-resistant inorgainc materials more than 23 parts by weight are combined to the binder resins, there are generated lots of precipitations due to saturation of corrosin-resistant inorganic materials, causing the deterioration of solution stability.

The composition comprises solvent except the solid component and a water or a mixed solution of water and alcohol is used as the solvent. Specifically, it is possible to further addat least one of a supplementary alcoholic solvent, acidic or basic aqueous solution for increasing properties of the composition, such as wettability, dispersability, and the like. Examples of the alcoholic solvent are ethanol, methanol, propanol, iso-propanol, glycerol and so on. At this time, it is preferable that the alcoholic solvent is added in a range of 1 weight % to 35 weight % with respect to the total amount of the composition. If the alcoholic solvent is added less than 1 weight %, the stability, the dispersability and the wettability of the solution are deteriorated. If the added amount of the alcoholic solvent is more than 35 weight %, odor and volatility becomes serious and thus workability is deteriorated.

Examples of the acidic aqueous solution are hydrochloric acid, sulfuric acid, nitric acid, phosphoric acid, acetic acid, carboxyl acid aqueous solution. Meanwhile, examples of the basic aqueous solution are sodium hydroxide, potassium hydroxide, sodium carbonate, ammonium hydroxide aqueous solution and so forth. The acidic or the basic aqueous solution may be used in a range of 0.2 weight % to 5 weight % with respect to the total amount of the composition. In addition, if the acidic or basic aqueous solution is less than 0.2 weight %, coating adhesion becomes poor. If the acidic or basic aqueous solution is more than 5 weight %, the metal sheet may be corroded or smells severely.

Since particles of the corrosion-resistant inorganic material are uniformly substituted and dispersed to the organic functional group of the binder resin, a resin solution exhibits excellent solution stability and anti-corrosive coating layer exhibits more improved corrosion resistance, conductivity, alkali resistance, and high temperature and humidity resistance.

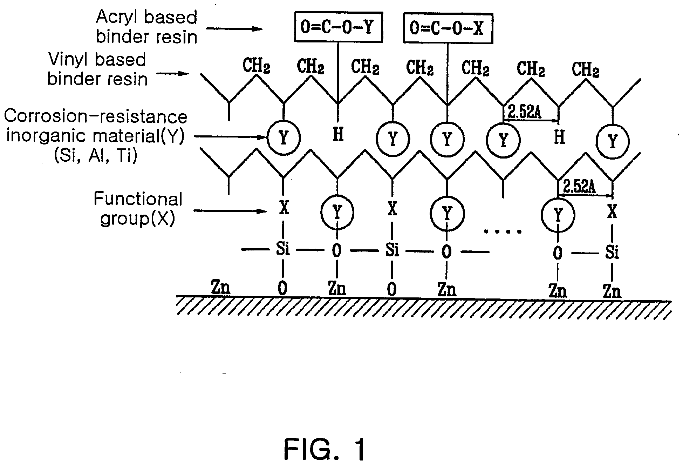

Fig. 1 is a schematic view illustrating a bonding state of a coating layer formed by coating the composition for the surface treatment according to the present invention. In Fig. 1, X represents a functional group (e.g., OCOH₃, Cl, OH, etc.) of the monomer for fabricating the binder, and Y represents the corrosion-resistant inorganic material. As the corrosion-resistant inorganic materials are combined to the acrylic based binder resin and vinyl based binder resin in the surface treatment composition of the invention as depicted in Figure 1, the corrosion-resistant inorganic materials are uniformly dispersed through the compact resin constitution of the coating layers, and thus the coating layers formed from the composition show improved corrosion-resistance.

The composition for the surface treatment according to the present invention is coated on a metal sheet and is hardened in a dryer or the like, thereby forming a coating layer with a dense structure as illustrated in Figure 1. The coating amount of the coating layer using the composition of the present invention ranges from 500 g/m² to 1,500 g/m² and a drying temperature (PMR, Pick Metal Temperature) ranges from 120°C to 200°C, which is similar to a drying temperature of a general resin based surface treatment solution. At this time, although the corrosion resistance is enhanced with the increase of the drying temperature, it is enough to dry the composition at the temperature of 120°C or more for satisfying the demanded quality. If the coating layer covers less than 500 g/m², corrosion resistance is not enough. On the other hand, if the coating layer covers more than 1,500 g/m², conductivity is decreased.

In the composition for the surface treatment of the present invention, any watersoluble resin where the corrosion-resistant inorganic material is combined can be used as the binder resin. A predetermined resin can be additionally added to the watersoluble resin, in which the corrosion-resistant inorganic material is combined. The predetermined resin is a resin in which the corrosion-resistant inorganic material is not combined, such as acryl, urethane, epoxy, alkyd, styrene/butadiene, polyethylene, polypropylene, polyester or the combination thereof, which is typically used for the surface treatment solution and the predetermined resin can be used alone or a mixture of two or more. In additional use of the predetermined resin, it is preferable that the amount of the predetermined resin should be less than 50 weight % on the basis of the solid content of the total composition It is more preferable that the amount should be in a range of 5 weight % to 40 weight %, and it is much more preferable that the amount should be in a range of 5 weight % to 25 weight %. In case the use amount of the binder resin exceeds 50 weight %, there is a problem that deteriorates at least one property among corrosion resistance, solution stability, alkali resistance, high temperature and humidity resistance, conductivity, heat resistance, stripes, point mark, or the like of the composition.

The compositions of the invention may optionally further comprise a separate additional corrosion-resistant inorganic material in an amount of 10 weight % or less based on the solid content of the composition. The corrosion-resistant material may be silicon (Si), titanium (Ti), aluminium (Al), magnesium (Mg), Zirconium (Zr), molybdenum (Mo), phosphorous (P), tungsten (W), vanadium (V), nickel (Ni), silver (Ag), gold (Au), copper (Cu) or a combination thereof.

This inorganic additive may be added as an inorganic precursor (e.g., salt, oxide or hydride) in a type of a powder, an emulsion or a solution.

More preferably the amount of this corrosion-resistant material is in a range of 1 weight % to 4 weight %. However, the corrosion-resistant inorganic material exceeding 10 weight % is not preferable because the solution stability may be deteriorated.

In addition, the composition for the surface treatment further comprises at least one of additives, including a wetting agent, a crosslinking agent, a curing agent, a lubricant, and an antifoaming agent. The wetting agent is effective for improving stripes and adhesion. The crosslinking agent and the curing agent are effective for enhancing corrosion resistance and alkali resistance. The lubricant is good for improving friction coefficient and processability. The antifoaming agent is useful for increasing workability. It is preferable that this additive should be in a range of 5 weight % to 15 weight % based on the solid content of the composition. If the amount of the additive is less than 5 weight %, there is no effect, such as corresive resistance and alkali resistance in spite of adding the additive. On the contrary, if the addition amount of the additive is more than 15 weight %, the effect of the additive is saturated so that it is not improved any more. To make matters worse, the excessive use of the additive makes the solution solubility decrease.

The wetting agent are classified into deflocculated wetting dispersing agent, polymeric wetting dispersing agent and so on. Examples of the wetting dispersing agent are those commercially available from EFCA Co. and Tego Co, for example, EFCA 3580^{™} (available from EFCA Co. Ltd.), BW-W500^{™} (available from Buhmwoo Co. Ltd.) or WET 500^{™} (available from EFCA Co. Ltd.).

Examples of the crosslinking agent are vinyl silane, acryl silane, epoxy silane, chlorosilane, alkoxysilane, silazane, and a silylating agent or the like. Examples of the lubricant are silicon wax, polyethylene wax, polypropylene wax, amid wax, polytetrafluoroethylene (PTFE) wax, paraffin wax or the like. Examples of the curing agent are polyamine based curing agent, polyamide based curing agent or anhydride based curing agent. Also, examples of the antifoaming agent are a silicon antifoaming agent in a type of oil, modified oil, solution, powder or emulsion.

In addition, the steel sheet which the composition of the present invention can be applied to is a galvanized steel sheet, a zinc based electroplated sheet such as Zn/Ni plated sheet, Zn/Fe plated sheet, Zn/Ti plated sheet, Zn/Mg plated sheet, Zn/Mn plated sheet, and Zn/Al plated sheet, a hot dipped galvanized steel sheet, an aluminized sheet, a plated sheet having a plating layer containing a different metal or impurity such as Co, Mo, W, Ni, Ti, Al, Mn, Fe, Mg, Sn, Cu or the like, a plated sheet where inorganic material such as silica, alumina, or the like is dispersed in the plating layer thereof, and an aluminum alloy steel sheet, where Si, Cu, Mg, Fe, Mn, Ti, Zn, or the like is added, a cold rolled steel sheet, or a hot rolled steel sheet. Furthermore, the present invention can be also applied to multi-layer plated sheet in which two kinds of the plating process are performed sequentially.

### Mode for the Invention

### 1. Preparation of a composition for metal surface treatment

### Examples 1 to 19

A vinyl based binder resin was prepared from monomers of vinyl acrylate and vinyl alcohol by the same weight ratio. In the preparation of the vinyl based binder resin, corrosion-resistant inorganic precursors as in table 1 were added to the monomers to prepare vinyl based binder resin, in which Si is combined solely or together with Ti, Al, Mg and P as corrosion-resistant inorganic material. A acryl based binder resin was prepared from n-butyl acrylate monomer. In the preparation of the acryl based binder resin, corrosion-resistant, corrosion-risistant inorganic precursors as in table 1 were added to the monomer to prepare acryl based binder resin, in which Si is combined solely or together with Ti, Al, Mg and P as a corrosion-resistant inorganic material.

The respective use amount of the vinyl based binder resin, acryl based binder resin and corrosion-resistant inorganic material are listed in a following Table 1 on a basis of a solid content. In Table 1, 0.5 weight % of carboxyl based wetting agent, BW-W500 ^{™} (available from Buhmwoo Chemical Co. Ltd.), 1.2 weight % of silane based crosslinking agent, BW-C500^{™} (available from Buhmwoo Chemical Co. Ltd.), 2.5 weight % of amine based curing agent, BW-H50^{™} (available from Buhmwoo Chemical Co. Ltd.), and 1.5 weight % of polyethylene based lubricant, BW-L500^{™} (available from Buhmwoo Chemical Co. Ltd.) based on the total amount of the composition were added in a bulk state as an additive, respectively. The solid content of the additives were 7 weight % based on total solid content of the composition. To each surface treatment composition, vinyl binder resin, acryl binder resin, corrosion-resistant materials and additives were added by an amount of the table 1 based on total solid content of the composition. Water was used a remaining main component except the solid component in an amount of that the total solid content to be 15 weight%. About 5 weight % ethanol as an alcoholic solvent and about 0.5 weight % of acetic acid as an acidic aqueous solution were added based on the total composition.

### Comparative Examples 1 to 7

The compositions for metal surface treatment in the comparative examples 1 to 7 were prepared by the same method of the example 1 to 19, except that the use amount of the vinyl based binder resin and the acryl based binder resin in which the corrosion-resistant inorganic material is combined, respectively is varied as listed in table 1.

### Comparative Examples 8 and 9

In the comparative examples 8 and 9, the compositions for metal surface treatment were prepared by the same method of the example 1 to 19, except that silicate, aluminate, magnesia and phosphate corrosion-resistant inorganic material, which are not combined to the binder resin and the additive are added into surface treatment composition with a predetermined composition ratio in table 1.

### 2. Preparation of Coated Steel Sheet

### 1) Specimen

An electro-galvanized (EG) steel sheet was used, of which coating amount is 20 g/m³ on the basis of one side only, as a raw material steel sheet, for being coated with the compositions for metal surface treatment prepared by the examples 1 to 17 and the comparative examples 1 to 8. Meanwhile, there was employed a product made in POSCO Co. Ltd., in which a phosphate pretreatment had been performed on the product, i.e., the EG steel sheet, for use in the comparative example 9 and the example 18. In addition, the comparative example 19 used a hot dip galvanized steel sheet(GI) of which the coating amount is 60 g/m³ on the basis of one side only.

### 2) Coating method

The compositions for surface treatment in the examples 1 to 19 and the comparative examples 1 to 9 were coated on one side of a steel sheet using a continuous roll coating simulator and was dried at a pick metal temperature of 150°C. After drying, the thickness of the resin film is about 1.0 □.

### 3. Method of evaluating performance

### (1) Conductivity

A surface of the specimen coated with the resin film was measured by a surface resistance meter, e.g., Loresta-GP^{™} and the results are evaluated based on following criterion.
O : surface resistance is 1 mΩ or less
Δ: surface resistance is 10 Ω or less
× : state that surface resistance is 10 Ω or more and conductivity or weldability is awfully bad.

### (2) Corrosion Resistance

The specimen of a flat board undergoes a brine spray test for about 120 hours according to JISZ2371, and then rust on the specimen was evaluated based on following criterion.
○: white rust is 5 % or less
Δ : white rust is 5 % or more and less than 20 %
× : white rust is 20 % or more

### (3) Alkali Resistance

The specimen was dipped into an alkaline solution, e.g., Finecleaner L4460 ^{™}, of which temperature was 50 °C and pH was 13, for about 5 minutes and then was rinsed out. Afterwards, delamination degree of the resin-coated layer was observed with a naked eye and the observation results were evaluated based on following criterion.
○: no delamination
Δ : delamination occurs 5 % or less
× : state that delamination occurs 5 % or more and shows awfully poor alkali resistance

### (4) High Temperature Resistance and Humidity Resistance

The specimen kept being in a constant temperature and humidity tester for about 48 hours on the condition that a test temperature and humidity were set to be 60 °C and 95 %, respectively. Thereafter, each color difference was measured before and after the test, and the measurement results were evaluated based on following criterion.
○: ΔE≤ 1
Δ:ΔE≤2
× : state that ΔE≥ 2 and shows awfully poor heat and humidity resistance

### (5) Structure of Coated Layer

The metal surface treatment compositions of example 5 and the comparative example 8, which have the same composition ratio were coated on the surface of the electro-galvanized steel sheet, respectively. Thereafter, the structure of the surface of the coated layer was observed for each coated layer using an atomic force microscopy (AFM).

### (6) Heat Resistance

The specimen kept being in an oven for about an hour and then was cooled naturally, wherein the oven temperature was set to be 100 °C, 150 °C, 200 °C and 250 °C, respectively. Each specimen underwent the brine spray test, and then rust on the specimen was evaluated based on the same condition with the method for evaluating the corrosion resistance.

### 4. Evaluation Result

Performance of each composition for metal surface treatment was evaluated under the above conditions and its evaluation result was described in a following table 1.

**Table 1**

| | Solid content in binder resin | | | D | Quality properties | | | | Remark |
|---|---|---|---|---|---|---|---|---|---|
| | A⁽¹⁾ | B⁽²⁾ | C | | E | F | G | H | I |
| Comp. Ex. 1 | 85 | 0 | 8⁽³⁾ | 7 | ○ | ○ | ○ | × | Stripe occurs |
| Comp. Ex.2 | 80 | 5 | 8⁽⁴⁾ | 7 | ○ | ○ | ○ | × | |
| Comp. Ex.3 | 75 | 10 | 8⁽⁴⁾ | 7 | ○ | ○ | ○ | × | |
| Example 1 | 70 | 15 | 8⁽⁴⁾ | 7 | ○ | ○ | ○ | Δ | ○ |
| Example 2 | 65 | 20 | 8⁽⁴⁾ | 7 | ○ | ○ | ○ | Δ | ○ |
| Example 3 | 60 | 25 | 8⁽⁴⁾ | 7 | ○ | ○ | ○ | Δ | ○ |
| Example 4 | 55 | 30 | 8⁽⁴⁾ | 7 | ○ | ○ | ○ | Δ | ○ |
| Example 5 | 50 | 35 | g⁽⁴⁾ | 7 | ○ | ○ | ○ | Δ | ○ |
| Example 6 | 45 | 40 | 8⁽³⁾ | 7 | ○ | ○ | ○ | ○ | ○ |
| Example 7 | 40 | 45 | 8⁽⁴⁾ | 7 | ○ | ○ | ○ | ○ | ○ |
| Example 8 | 35 | 50 | 8⁽⁴⁾ | 7 | ○ | ○ | Δ | ○ | ○ |
| Example 9 | 30 | 55 | 8⁽⁴⁾ | 7 | ○ | ○ | Δ | ○ | ○ |
| Example 10 | 25 | 60 | 8⁽⁴⁾ | 7 | ○ | Δ | ○ | ○ | ○ |
| Example 11 | 20 | 65 | 8⁽³⁾ | 7 | ○ | Δ | Δ | ○ | ○ |
| Example 12 | 15 | 70 | 8⁽⁴⁾ | 7 | ○ | Δ | Δ | ○ | ○ |
| Example 13 | 10 | 75 | 8⁽⁴⁾ | 7 | ○ | Δ | ○ | ○ | ○ |
| Comp. Ex.4 | 5 | 80 | 8⁽⁴⁾ | 7 | ○ | Δ | × | ○ | ○ |
| Comp. Ex.5 | 0 | 85 | 8⁽⁴⁾ | 7 | ○ | ○ | × | ○ | ○ |
| Comp. Ex.6 | 50 | 41 | 2⁽⁴⁾ | 7 | ○ | × | ○ | ○ | ○ |
| Example 14 | 50 | 40 | 3⁽⁴⁾ | 7 | ○ | ○ | ○ | ○ | ○ |
| Example 15 | 50 | 33 | 10⁽⁴⁾ | 7 | ○ | ○ | ○ | ○ | ○ |
| Example 16 | 40 | 33 | 20⁽⁴⁾ | 7 | ○ | ○ | ○ | ○ | ○ |
| Example 17 | 35 | 33 | 25⁽⁴⁾ | 7 | ○ | ○ | ○ | ○ | ○ |
| Example 18 | 50 | 35 | 8⁽⁴⁾ | 7 | × | ○ | ○ | ○ | ○ |
| Example 19 | 50 | 35 | 8⁽⁴⁾ | 7 | ○ | ○ | ○ | ○ | Precipitation |
| Comp. Ex.7 | 35 | 28 | 30⁽⁴⁾ | 7 | ○ | × | × | × | ○ |
| Comp. Ex.8 | 50 | 35 | 8⁽⁴⁾ | 7 | ○ | × | ○ | ○ | ○ |
| Comp. Ex.9 | 50 | 35 | 8⁽⁴⁾ | 7 | × | ○ | ○ | ○ | ○ |

| | | | | | | | | | |
|---|---|---|---|---|---|---|---|---|---|
| (1) Vinyl binder resins were prepared from vinyl acetate and vinyl alcohol as vinyl monomer with the same amount. (2) Acryl binder resins were prepared from n-butyl acrylate as acrylate monomer. (3) Silicates were used to provide corrosion-resistant materials in Comparative Example 1, Example 6 and 11. (4) Mixtures of silicate, titanate, aluminate, magnesia and phosphate in the ratio of 80:8:5:4:3 based on weight ratio were used to provide corrosion-resistant materials in Comparative Examples 2 to 9, Examples 1 to 5, and Examples 7 to 10, and Examples 12 to 19. | | | | | | | | | |

Herein, capital letters of A through D denote vinyl (wt%), acryl (wt%), corrosion resistant material (wt%) and solid content in the other additive (wt%), respectively, and capital letters of E through I represent conductivity, corrosion resistance, alkali resistance, high temperature and humidity resistance, and surface appearance and solution stability, respectively.

As listed in table 1, the compositions of the examples 1 to 19 in a composition ratio range of the present invention show excellent properties in comparison with those of the comparative examples 8 and 9 in which the corrosion resistant additive is inputted with the additive. However, the compositions of the comparative examples 1 to 7, which are out of the inventive composition ratio range, show poor properties.

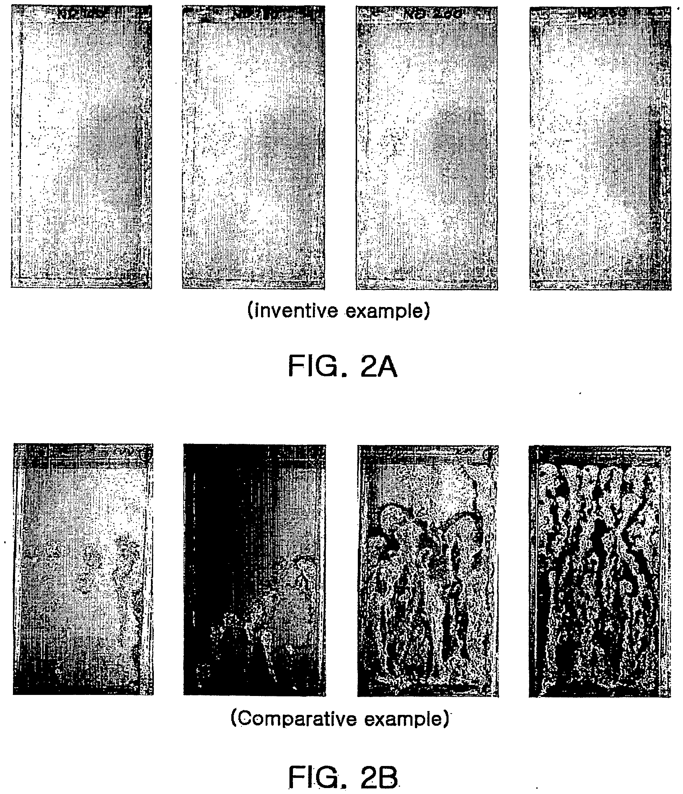

In order to evaluate the heat resistance for each of the specimens (flat board) of the example 5 and the comparative example 8, the brine spray test is performed for 72 hours at a temperature of 100 °C, 150 °C, 200 °C and 250 °C according to JISZ2371, respectively. The test results are illustrated in Figs. 2A and 2B. As shown in Figs. 2A and 2B, the specimen of the example 5 according to the present invention shows very excellent heat resistance at each temperature and the quality property of the resin film is well maintained so as to keep the excellent corrosion resistance after the brine spray test. On the contrary, the specimen of the comparative example 8 shows poor heat resistance at ambient of high temperature and the quality property of the resin film is deteriorated after the brine spray test. Therefore, it is found out that white rust or red rust occurs after the test.

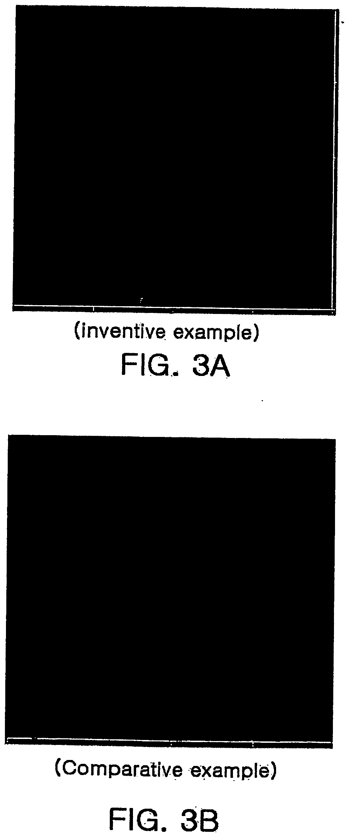

Figs. 3A and 3B illustrate an observation result of a surface structure of the coated layer using the AFM after coating each of the compositions of the example 5 and the comparative example 8 on the surface of the electro-galvanized steel sheet. It can be seen from Figs. 3A and 3B that the surface of the steel sheet coated with the composition is uniform in which the coated film is fine. In comparison with this, it can be seen that corrosion-resistant inorganic particles are somewhat distributed non-uniformly in the steel sheet of the comparative example 8.

## Claims

1. A composition for metal surface treatment, comprising
(i) 10 weight % to 70 weight % with respect to the total solid content of the composition of a vinyl based binder resin in which a corrosion-resistant inorganic material is bonded to the vinyl based resin in an amount of 5 parts by weight to 23 parts by weight with respect to 100 parts by weight of the vinyl based binder resin;
(ii) 15 weight % to 75 weight % with respect to the total solid content of the composition of an acryl based binder resin to which a corr osion-resistant inorganic material is bonded in an amount of 5 parts by weight to 23 parts by weight with respect to 100 parts by weight of the acryl based binder resin;
optionally
(iii) 50 weight % or less with respect to the total solid content of the composition of a resin selected from the group consisting of acryl, urethane, epoxy, alkyd, styrene/butadiene, polyethylene, polypropylene, polyester and combinations thereof, in which a corrosion-resistant inorganic material is not combined,
optionally
(iv) 10 weight % or less based on the total solid content of the composition of a separate additional corrosion resistant inorganic material;
optionally
(v) an additive selected from a wetting agent, a crosslinking agent, a curing agent, a lubricant, an antifoaming agent and combinations thereof; and
(vi) a solvent;
wherein the corrosion resistant inorganic material in (i), (ii), and (iv) is selected from silicon (Si), titanium (Ti), aluminum (Al), magnesium (Mg), zirconium (Zr), molybdenum (Mo), phosphorous (P), tungsten (W), vanadium (V), nickel (Ni), silver (Ag), gold (Au), Copper (Cu), and combinations thereof; and wherein the amount of corrosion-resistant inorganic material is in the range of 3 weight % to 25 weight % with respect to the total solid content of the composition.

2. A composition according to claim 1 comprising a crosslinking agent, which is at least one of vinyl silane, acryl silane, epoxy silane, chlorosilane, alkoxysilane, silazane, cr a silylating agent.

3. A composition according to claim 1 comprising a lubricant, which is at least one of silicon wax, polyethylene wax, polypropylene wax, amid wax, poly-letrafluoroethylene (PTFE) wax, or paraffin wax.

4. A process for producing a composition according to any one of claims 1 to 3, comprising
(A) preparing (i) by adding an inorganic precursor comprising the corrosion-resistant inorganic material in the form of a salt, oxide or hydride into monomers for the vinyl based binder resin in a polymerization reaction so that the corrosion-resistant inorganic material reacts with an organic functional group of the polymer so as to be uniformly introduced into the polymer;
(B) preparing (ii) by adding an inorganic precursor comprising the corrosion-resistant inorganic material in the form of a salt, oxide or hydride into monomers for the acryl based binder resin in a polymerization reaction so that the corrosion-resistant inorganic material reacts with an organic functional group of the polymer so as to be uniformly introduced into the polymer.

5. A composition for metal surface treatment obtained by a process according to claim 4 or 5.

6. A surface-treated metal sheet treated with a composition of any one of the preceding claims 1 to 3.

7. The surface-treated metal sheet of claim 6, which is a steel sheet and is selected from a galvanized steel sheet, zinc-based electro- galvanized steel sheet, a hot dipped galvanized steel sheet, an aluminumized sheet, a plated steel sheet having a plating layer containing a different metal or impurity selected from Co, Mo, W, Ni, Ti, Al, Man, Fe, Mg, Sn, Cu and combinations thereof, a plated sheet where a material selected from silica, alumina, and combinations thereof is dispersed in the coated film, and an aluminum alloyed steel sheet, where a material selected from Si, Cu, Mg; Fe, Mn, Ti, Zn, and combinations thereof is added, a cold rolled steel sheet and a hot rolled steel sheet.

## Patentansprüche

1. Zusammensetzung für eine Metalloberflächenbehandlung, umfassend
(i) 10 Gew.-% bis 70 Gew.-% in Bezug auf den Gesamtfeststoffgehalt der zusammensetzung eines auf Vinyl basierendes Bindemittelharzes, in dem ein korrosionsbeständiges anorganisches Material an das auf Vinyl basierende Harz in einer Menge von 5 Gewichtsteilen bis 23 Gewichtsteilen in Bezug auf 100 Gewichtsteile des auf Vinyl basierenden Bindemittelharzes gebunden ist;
(ii) 15 Gew.-% bis 75 Gew.-% in Bezug auf den Gesamtfeststoffgehalt der Zusammensetzung eines auf Acryl basierendes Bindemittelharzes, an das ein korrosionsbeständiges anorganisches Material an das auf Vinylbasierende Harz in einer Menge von 5 Gewichtsteilen bis 23 Gewichtsteilen in Bezug auf 100 Gewichtsteile des auf Acryl basierenden Bindemittelharzes gebunden ist;
wahlweise
(iii) 50 Gew.-% oder weniger in Bezug auf den Gesamtfeststoffgehalt der Zusammensetzung eines Harzes, das ausgewählt ist aus der Gruppe, bestehend aus Acryl, Urethan, Epoxy, Alkyd, Styrol/Butadien, Polyethylen, Polypropylen, Polyester und Kombinationen davon, in dem ein korrosionsbeständiges anorganisches Material nicht kombiniert ist,
wahlweise
(iv) 10 Gew.-% oder weniger bezogen auf den Gesamtfeststoffgehalt der Zusammensetzung eines getrennten zusätzlichen korrosionsbeständigen anorganischen Materials;
wahlweise
(v) einen zusatzstoff, der ausgewählt ist aus einem Benetzungsmittel, einem Vernetzungsmittel, einem Härtungsmittel, einem Schmiermittel, einem Antischaummittel und Kombinationen davon; und
(vi) ein Lösungsmittel;
wobei das korrosionsbeständige anorganische Material in (i), (ii) und (iv) ausgewählt ist aus Silicium (Si), Titan (Ti), Aluminium (AT), Magnesium (Mg), Zirkonium (Zr), Molybdän (MO), Phosphor (P), Wolfram (W), Vanadium (V), Nickel (Ni), Silber (Ag), Gold (Au), Kupfer (Cu) und Kombinationen davon; und wobei die Menge von korrosionsbeständigem anorganischem Material im Bereich von 3 Gew.-% bis 25 Gew.-% in Bezug auf den Gesamtfeststoffgehalt der Zusammensetzung liegt.

2. Zusammensetzung nach Anspruch 1, umfassend ein Vernetzungsmittel, das mindestens eines von vinylsilan, Acrylsilan, Epoxysilan, Chlorsilan, Alkoxysilan, Silazan oder einem Silylierungsmittel ist.

3. Zusammensetzung nach Anspruch 1, umfassend ein Schmiermittel, das mindestens eines von Siliciumwachs, Polyethylenwachs, Polypropylenwachs, Amidwachs, Polytetrafluorethylen (PTFE) -Wachs oder Paraffinwachs ist.

4. Verfahren zum Herstellen einer Zusammensetzung nach einem der Ansprüche 1 bis 3, umfassend
(A) Herstellen von (i) durch Hinzufügen eines anorganischen Vorläufer, der das korrosionsbeständige anorganische Material in Form eines Salzes, Oxids oder Hydrid zu Monomeren für das auf Vinyl basierende Bindemittelharz in einer Polymerisationsreaktion umfasst, sodass das korrosionsbeständige anorganische Material mit einer organischen funktionellen Gruppe des Polymers reagiert, um in das Polymer gleichmäßig eingeführt zu werden;
(B) Herstellen von (ii) durch Hinzufügen eines anorganischen Vorläufers, der das korrosionsbeständige anorganische Material in Form eines Salzes, Oxids oder Hydrids zu Monomeren für das auf Acryl basierende Bindemittelharz in einer Polymerisationsreaktion umfasst, sodass das korrosionsbeständige anorganische Material mit einer organischen funktionellen Gruppe des Polymers reagiert, um in das Polymer gleichmäßig eingeführt zu werden.

5. Zusammensetzung für die Metalloberflächenbehandlung, die durch ein Verfahren nach Anspruch 4 oder 5 erhalten wird.

6. Oberflächenbehandeltes Metallblech, das mit einer Zusammensetzung nach einem der vorherigen Ansprüche 1 bis 3 behandelt ist.

7. oberflächenbehandeltes Metallblech nach Anspruch 6, das ein Stahlblech ist und ausgewählt ist aus einem galvanisierten Stahlblech, zinkbasierten galvanisch verzinkten Stahlblech, einem feuerverzinkten Stahlblech, einem aluminiumbeschichteten Blech, einem plattierten Stahlblech mit einer Plattierungsschicht, die ein anderes Metall oder Verunreinigung enthält, die ausgewählt ist aus Co, Mo, W, Ni, Ti, Al, Mn, Fe, Mg, Sn, Cu und Kombinationen davon, einem plattierten Blech, wobei ein Material ausgewählt aus Siliciumdioxid, Aluminiumoxid und Kombinationen davon in dem beschichteten Film dispergiert ist, und einem aluminiumlegierten Stahlblech, wobei ein Material ausgewählt aus Si, Cu, Mg, Fe, Mn, Ti, Zn und Kombinationen davon hinzugefügt wird, einem kaltgewalzten Stahlblech und einem warmgewalzten Stahlblech.

## Revendications

1. Composition de traitement de surface métallique, comprenant
(i) 10% en masse à 70% en masse par rapport à la teneur totale en matière sèche de la composition d'une résine liante à base de vinyle dans laquelle un matériau inorganique résistant à la corrosion est lié à la résine à base de vinyle selon une quantité de 5 parties en masse à 23 parties en masse pour 100 parties en masse de 1a résine liante à base de vinyle ;
(ii) 15% en masse à 75% en masse par rapport à la teneur totale en matière sèche de la composition d'une résine liante à base d'acryle à laquelle un matériau inorganique résistant à la corrosion est lié selon une quantité de 5 parties en masse à 23 parties en poids pour 100 parties en masse de la résine liante à base d'acryle ;
facultativement
(iii) 50% en masse au moins par rapport à la teneur totale en matière sèche de la composition d'une résine choisie dans le groupe constitué par une résine acrylique, une résine uréthane, une résine époxy, une résine alkyde, une résine styrène/butadiène, une résine poly(éthylène), une résine poly(propylène), une résine poly(ester) et leurs combinaisons, dans laquelle un matériau inorganique résistant à la corrosion n'est pas combiné,
facultativement
(iv) 10% en masse ou moins par rapport à la teneur totale en matière sèche de la composition d'un matériau inorganique résistant à la corrosion additionnel séparé ;
facultativement
(v) un additif choisi parmi un agent mouillant, un agent de réticulation, un agent de durcissement, un lubrifiant, un agent antimousse et leurs combinaisons ; et
(vi) un solvant ;
dans laquelle le matériau inorganique résistant à la corrosion dans (i), (ii) et (iv) est choisi parmi le silicium [Si), le titane (Ti), l'aluminium (A1), le magnésium (Mg), le zirconium (Zr), le molybdène (Mo), le phosphore (P), le tungstène (W), le vanadium (V), le nickel (Ni), l'argent (Ag), l'or (Au), le cuivre (Cu) et leurs combinaisons ; et dans laquelle la quantité de matériau inorganique résistant à la corrosion est dans la plage de 3 % en masse à 25 en masse par rapport à la teneur totale en matière sèche de la composition.

2. composition selon la revendication 1, comprenant un agent de réticulation, qui est au moins un élément parmi un vinylsilane, un acrylsilane, un époxysilane, un chlorosilane, un alcoxysilane, un silazane ou un agent de silylation.

3. Composition selon la revendication 1, comprenant un lubrifiant, qui est au moins un élément parmi une cire de silicium, une cire de poly(éthylène), une cire de poly(propylène), une cire d'amide, une cire de poly(tétrafluoroéthylène) (PTFE) ou une cire de paraffine.

4. Procédé de production d'une composition selon l'une quelconque des revendications 1 à 3, comprenant
(A) la préparation (i) en ajoutant un précurseur inorganique comprenant le matériau inorganique résistant à la corrosion sous forme d'un sel, oxyde ou hydrure dans des monomères pour la résine liante à base de vinyle dans une réaction de polymérisation de sorte que le matériau inorganique résistant à la corrosion réagit avec un groupe fonctionnel organique du polymère de façon à être introduit uniformément dans le polymère ;
(B) la préparation (ii) en ajoutant un précurseur inorganique comprenant le matériau inorganique résistant à la corrosion sous forme d'un sel, oxyde ou hydrure dans des monomères pour la résine liante à base d'acryle dans une réaction de polymérisation de sorte que le matériau inorganique résistant à la corrosion réagit avec un groupe fonctionnel organique du polymère de façon à être introduit uniformément dans le polymère.

5. Composition de traitement de surface métallique obtenue par un procédé selon la revendication 4 ou 5.

6. Feuille métallique traitée en surface avec une composition selon l'une quelconque des revendications précédentes 1 à 3.

7. Feuille métallique traitée en surface selon la revendication 6, qui est une feuille d'acier et est choisie parmi une feuille d'acier galvanisée, une feuille d'acier électrogalvanisée à base de zinc, une feuille d'acier galvanisée par immersion à chaud, une feuille aluminisée, une feuille d'acier plaquée comportant une couche de plaquage contenant un métal différent ou une impureté choisie parmi Co, Mo, W, Ni, Ti, Al, Mn, Fe, Mg, Sn, Cu et leurs combinaisons, une feuille plaquée où un matériau choisi parmi la silice, l'alumine et leurs combinaisons est dispersé dans le film revêtu, et une feuille d'acier en alliage d'aluminium, où un matériau choisi parmi Si, Cu, Mg, Fe, Mn, Ti, Zn et leurs combinaisons est ajouté, une feuille d'acier laminée à froid et une feuille d'acier laminée à chaud.
